# EUROPEAN PATENT APPLICATION

(11) **EP 4 112 808 A1**
(43) Date of publication of application: **04.01.2023**
(21) Application number: 22180294.5
(22) Date of filing: 22.06.2022
(51) Int. Cl.: D21B 1/08

(54) **SYSTEM AND METHOD OF PROCESSING RECYCLED TEXTILE MATERIAL**

(30) Priority: 24.06.2021 FI 20215746
(71) Applicant: Valmet Technologies Oy, 02150 Espoo (FI)
(72) Inventor: AHO, Tuomo, 33840 Tampere (FI); HUHTANEN, Juha-Pekka, 33840 Tampere (FI); POUSI, Juha, 46900 Inkeroinen (FI)
(74) Representative: Berggren Oy

(57) **Abstract**

The invention relates to a system of processing recycled textile material comprising synthetic fibers and non-synthetic fibers, which system (10) comprises feeding means (11) and a dispersing section (12). The dispersing section (12) is configured to perform a dispersing stage to tear pieces of recycled textile into fibers and/or fiber flocks in high consistency of 15-90%, more advantageously 20-60%, most advantageously 25-45% and the dispersing section (12) comprises at least one dispergator (121) or at least one HC-refiner with fillings formed of bars with bar width of 1,5 mm - 20 mm and grooves with groove depth of 1 mm - 50 mm and groove width of 1 mm - 20 mm. The invention also relates to a method of processing recycled textile fibers, in which method recycled textile material comprising synthetic fibers and non-synthetic fibers, in particular cotton fibers, is processed, which method is performed in a system (10) comprising feeding means (11) and a dispersing section (12), which method comprises a feeding stage, in which pieces of the recycled textile material is fed and/or shredded by the feeding means (11), and a dispersing stage, in which the pieces of the recycled material are torn to fibers and/or fiber flocks of the recycled textile material in the dispersing section (12). The dispersing stage to tear pieces of recycled textile into fibers and/or fiber flocks is performed in high consistency of 15-90%, more advantageously 20-60%, most advantageously 25-45% by at least one dispergator (121) or at least one HC-refiner with fillings formed of bars with bar width of 1,5 mm - 20 mm and grooves with groove depth of 1 mm - 50 mm and groove width of 1 mm - 20 mm.

## Description

### Technical field

In general, present invention relates to processing of recycled textile material. More especially the present invention relates to a system of processing recycled textile material according to preamble part of the independent system claim and to a method of processing recycled textile material according to preamble part of the independent method claim.

### Background

It is known from prior art to use different kinds of pulper configurations for pulping the recycled textile material in low consistency, typically at about 4-5 % consistency. When the recycled textile material is to be fiberized fully by pulping, long dwell time and huge amount of energy is needed, but there still may remain some pieces not fiberized recycled material left after the pulping. Thus, there exists a need to process the recycled textile material such, that the recycled textile material is torn to fibers and/or small fiber flocks with minimal energy at the beginning of textile recycling process.

An object of the invention is to create a system and method of processing recycled textile material, in which the disadvantages and problems of prior art are eliminated or at least minimized.

An object of the invention is to create an improved system and method of processing recycled textile material, in which new, alternative ways of processing recycled textile material are provided.

A particular, non-binding, object of the invention is to create a system and method of processing recycled textile material, in which especially the disadvantages and problems relating to tearing the recycled textile material to fibers and/or small fiber flocks are eliminated or at least minimized.

### Summary

In order to achieve the above mentioned objects, the system of processing recycled textile material according to the invention is mainly characterized by the features of the characterizing clause of the independent system claim and the method of processing recycled textile material according to the invention is in turn mainly characterized by the features of the characterizing clause of the independent method claim. Advantageous embodiments and features are disclosed in the dependent claims.

According to the invention the system of processing recycled textile material comprising synthetic fibers and non-synthetic fibers comprises feeding means and a dispersing section, wherein the dispersing section is configured to perform a dispersing stage to tear pieces of recycled textile into fibers and/or fiber flocks in high consistency of 15-90%, more advantageously 20-60%, most advantageously 25-45% and the dispersing section comprises at least one dispergator with fillings formed of bars with bar width of 1,5 mm - 20 mm and grooves with groove depth of 1 mm - 50 mm and groove width of 1 mm - 20 mm or at least one HC-refiner with fillings formed of bars with bar width of 1,5 mm - 20 mm and grooves with groove depth of 1 mm - 50 mm and groove width of 1 mm - 20 mm and specific energy consumption in the dispersing section is 30-500 kWh/t.

According to an advantageous feature the system further comprises after the dispersing section located refining section comprising at least one refiner and configured to perform a refining stage to refine in low consistency of 3-6 % the fibers and/or the fiber flocks received from the dispersing section.

According to an advantageous feature the system further comprises after the dispersing section located refining section comprising at least one refiner and configured to perform a refining stage to refine in high consistency of 25-50 % the fibers and/or the fiber flocks received from the dispersing section.

According to an advantageous feature the refining section has more than one refiner and the refiners are connected in series or parallel.

According to the invention in the method of processing recycled textile fibers recycled textile material comprising synthetic fibers and non-synthetic fibers, in particular cotton fibers, is processed, which method is performed in a system comprising feeding means and a dispersing section, which method comprises a feeding stage, in which pieces of the recycled textile material is fed and/or shredded by the feeding means, and a dispersing stage, in which the pieces of the recycled material are torn to fibers and/or fiber flocks of the recycled textile material in the dispersing section, wherein the dispersing stage to tear pieces of recycled textile into fibers and/or fiber flocks is performed in high consistency of 15-90%, more advantageously 20-60%, most advantageously 25-45% by at least one dispergator with fillings formed of bars with bar width of 1,5 mm - 20 mm and grooves with groove depth of 1 mm - 50 mm and groove width of 1 mm - 20 mm or at least one HC-refiner with fillings formed of bars with bar width of 1,5 mm - 20 mm and grooves with groove depth of 1 mm - 50 mm and groove width of 1 mm - 20 mm and specific energy consumption in the dispersing stage is 30-150 kWh/t.

According to an advantageous feature the method further comprises a refining stage performed after the dispersing stage in at least one refiner of a refining section of the system and in the refining stage the fibers and/or the fiber flocks received from the dispersing stage are refined in low consistency of 3-6 %.

According to an advantageous feature the method further comprises a refining stage performed after the dispersing stage in at least one refiner of a refining section of the system and in the refining stage the fibers and/or the fiber flocks received from the dispersing stage are refined in high consistency of 25-50 %.

According to an advantageous feature the refining stage is performed in more than one refiners and the refined recycled textile material is recirculated back to an inlet of a previous refiner one or more times to achieve desired properties of the refined recycled textile material.

According to an advantageous aspect feeding of textile pieces of the recycled textile material to fiber treatment of the system will take place at low moisture content, up to 10 %, which saves energy and also simplifies the process and enables that textile material pieces can be fed directly to the system.

According to an advantageous aspect the system comprises a dispersing section with at least one disperger or at least one high consistency (HC-refiner) refiner, to tear the recycled textile material to the separate fibers and/or fibers flocks at the high consistency, advantageously of 15-90%, more advantageously 20-60%, most advantageously 25-45%, to ensure that the further processing e.g., refining can be done efficiently.

According to an advantageous aspect the system comprises a refining section comprising at least one refiner for final fiber treatment (e.g. fiber cutting), in which the refining is conducted either at low consistency (LC) in a low consistency refiner (LC-refiner) or at high consistency (HC) in a high consistency refiner (HC-refiner).

According to an advantageous aspect in the system textile material pieces with area typically less than 300 cm², are fed to at least one disperger, typically to at least one conical or disc type disperger, or to at least one HC-refiner of the dispersing section at the high consistency of 15-90%, more advantageously 20-60%, most advantageously 25-45%. The textile pieces are torn to the separate fibers and/or the small fiber flocks in the disperger or in the HC-refiner.

According to an advantageous aspect the system comprises feeding means to feed the recycled textile material pieces to the dispersing section. The feeding means is advantageously a separate feeding screw with its own motor or an integrated feeding screw, which is fixed to a disperger shaft of the disperger. The feeding means may comprise a connection to a dilution water source to adjust the dispersing consistency to range of 15-90%, more advantageously 20-60%, most advantageously 25-45%.

According to an advantageous aspect the disperger/-s / HC-refiner/-s of the dispersing section comprise/-s fillings formed of bars with bar width of 1,5 mm - 20 mm and grooves with groove depth of 1 mm - 50 mm and groove width of 1 mm - 20 mm.

According to an advantageous aspect the LC-refiner of the refining section comprises fillings formed of bars with bar width of 1-10 mm and grooves with groove depth of 1-20mm and groove width of 1-20 mm.

According to an advantageous aspect the HC-refiner of the refining section comprises fillings formed or bars with bar width of 1,5-20 mm and grooves with groove depth of 1-50 and groove width of 1-20 mm.

According to an advantageous aspect typical specific energy consumption in the dispersing section is at the range of 30-500 kWh/t. In dispersing energy consumption is typically 30-150 kWh/t, in HC-refining energy consumption is typically 200-350 kWh/t and in LC-refining energy consumption is typically 70-200 kWh/t.

According to an advantageous aspect depending on type of next section of the system, discharge from the disperger is at high consistency, advantageously 20-60 %, or at middle consistency, advantageously 6-20 %, or at low consistency, advantageously 3-6 %. Advantageously in cases, where the discharge will take place in the middle or low consistency, dilution water from the dilution water source is introduced in the disperger in the discharge side.

According to an advantageous aspect the recycled textile material pieces is fed at low moisture content, up to 10 %, to the feed screw to the disperger. During feeding by the feed screw the recycled textile material pieces are diluted to dispergation consistency of 15-90%, more advantageously 20-60%, most advantageously 25-45%. Advantageously, at the outlet side of the disperger the recycled textile material is diluted to consistency of about 6 % for refining in low consistency and the refining is provided in at least one stage or in series of stages in the low consistency of 3-6 %. Alternatively advantageously, the recycled textile material is not diluted at the outlet side of the disperger but instead fed directly from the dispergator to high consistency refining in consistency of 20-40%.

### Brief description of the drawings

In the following the invention is explained in detail with reference to the accompanying drawing to which the invention is not to be narrowly limited.
In figure 1 is shown schematically an advantageous example of a system of processing recycled textile fibers.
In figure 2 is shown schematically another advantageous example of a system of processing recycled textile fibers.
In figures 3A-3B is shown schematically yet advantageous examples of the system of processing recycled textile fibers.

### Detailed description

During the course of the following description like numbers and signs will be used to identify like elements according to the different views which illustrate the invention and its advantageous examples. In the figure some repetitive reference signs have been omitted for clarity reasons.

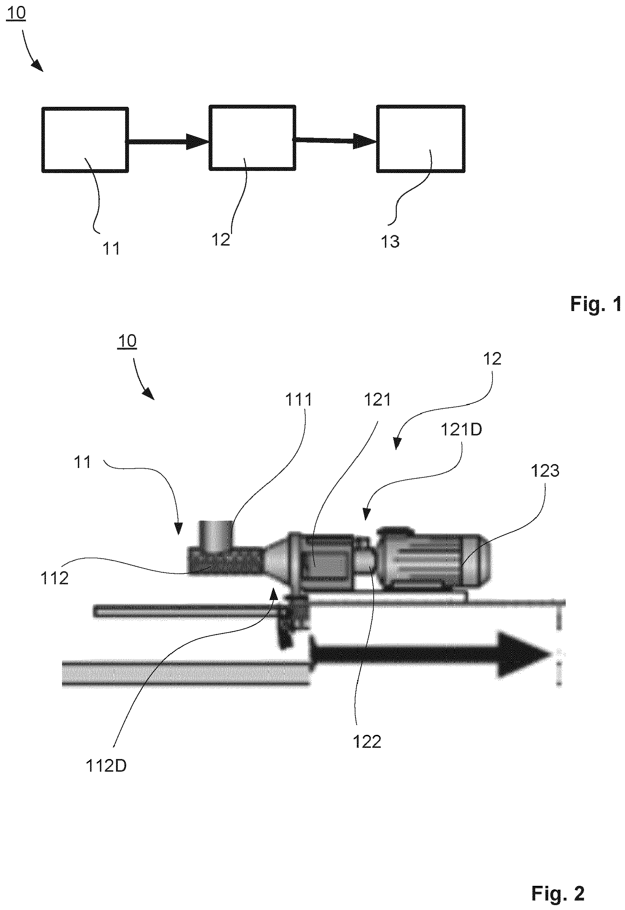

In figure 1 is shown schematically an example of a system 10 of processing recycled textile fibers. The system 10 comprises feeding means 11, a dispersing section 12 and a refining section 13. The feeding means 11 are configured to feed and advantageously shred pieces of recycled textile material at low moisture content, up to 10 %, to the dispersing section 12. In the dispersing section 12 the pieces of the recycled textile material are configured to be torn to separate fibers and/or fiber flocks at high consistency of 15-90%, more advantageously 20-60%, most advantageously 25-45%. From the dispersing section the separate fibers and/or fiber flocks of the recycled textile material are fed to the refining section 13, which is configured to refine the separate fibers and/or the fiber flocks either at low consistency of 3-6 % or at high consistency of 20-60 %.

According to the example of the figure 2 the system 10 comprises feeding means 11 comprising a feed pipe 111 and a feeding screw 112, a dispersing section 12 comprising at least one disperger 121 comprising a shaft 122 and a motor 123 with dilution water feed from a dilution water source at discharge side 12D of the disperger 12. Instead of or in addition to the at least one disperger 121 the dispersing section 12 may comprise a HC-refiner. The recycled textile material pieces with area typically less than 300 cm2 are fed at low moisture content, up to 10 %, via the feed pipe 111 and the feeding screw 112 to the disperger 121, which is a conical or a disc type disperger. The recycled textile material pieces are torn to the separate fibers and/or the fiber flocks in the disperger 121 at high consistency of 15-90%, more advantageously 20-60%, most advantageously 25-45%. The feeding screw 112 in this example is integrated i.e., fixed to the shaft 122 of the disperger 121 and thus to the motor 123 of the disperger 122. In the feeding screw 112 dilution water from a dilution water source 112D can be used to adjust the dispersing consistency. The disperger 121 the disperger/-s / HC-refiner/-s of the dispersing section comprise/-s fillings formed of bars with bar width of 1,5 mm - 20 mm and grooves with groove depth of 1 mm - 50 mm and groove width of 1 mm - 20 mm. Typical specific energy consumption in the dispersing is at the range of 30-500 kWh/t. In dispersing energy consumption is typically 30-150 kWh/t, in HC-refining energy consumption is typically 200-350 kWh/t and in LC-refining energy consumption is typically 70-200 kWh/t. Depending on the next subprocess, discharge from disperger 121 can be done at high consistency of 20-50 % or at middle consistency of 6-20 % or at low consistency of 3-6 %. If the discharge will take place in the middle or low consistency, dilution water from a dilution water source 121D is introduced in the disperger 121 at the discharge side.

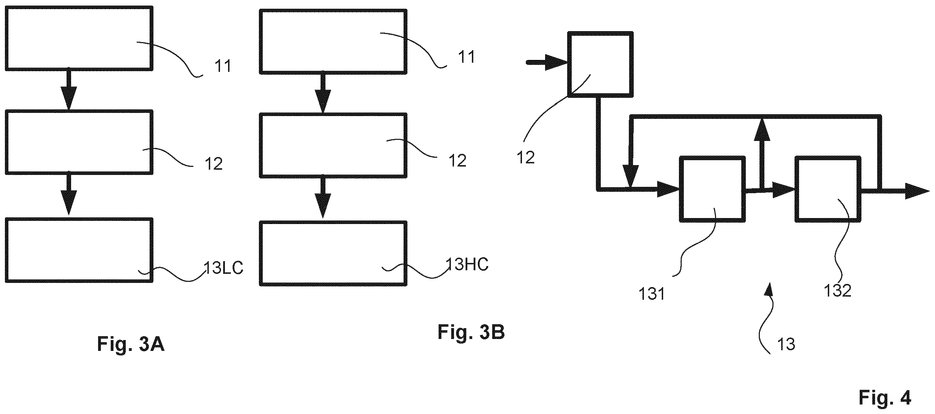

In figure 3A shown example the system comprises the feeding means 11 for a feeding stage of feeding pieces of recycled textile material at low moisture content, up to 10%, with optional dilution during the feeding stage. The system also comprises a dispersing section 12 of a dispersing stage for dispersing the pieces of the recycled textile material to fibers and/or fiber flocks of the recycled textile material in consistency of 15-90%, more advantageously 20-60%, most advantageously 25-45%. The discharge consistency to a LC-refining section 13LCof the system for refining stage of refining the fibers and/or the fiber flocks in this example is low, 3-6 % consistency and in the refining stage of this example the consistency is 3-6%.

In figure 3B shown example the system comprises the feeding means 11 for a feeding stage of feeding pieces of recycled textile material at low moisture content, up to 10%, with optional dilution during the feeding stage. The system also comprises a dispersing section of a dispersing stage for dispersing the pieces of the recycled textile material to fibers and/or fiber flocks of the recycled textile material in consistency of 15-90%, more advantageously 20-60%, most advantageously 25-45%. The discharge consistency to a HC-refining section 13HC of the system for refining stage of refining the fibers and/or the fiber flocks in this example is high, 25-50 % consistency and in the refining stage of this example the consistency is 25-50 %.

In figure 4 is shown an example, in which the system comprises a dispersing section for a dispersing stage. The dispersing section 12 comprises a dispergator to which pieces of recycled textile material is fed low moisture content, up to 10%. During the dispersing stage in the dispersing section the pieces of the recycled textile material are torn to fibers and/or fiber flocs of the recycled textile material. After the dispersing stage an optional dilution stage may follow, in which the fibers and/or fiber flocs of the recycled textile material are diluted by dilution water from a dilution water source. After the dispersing stage in the dispersing section (and the optional dilution stage) the the fibers and/or fiber flocs of the recycled textile material is refined in at least one refining stage in a refining section 13. The refining section 13 comprises at least one refiner 131; 132. In the example the refining section 13 comprises two refiners 131, 132. The refiners 131, 132 are connected in series or parallel. The refined recycled textile material can be recirculated back to an inlet of a previous refiner one or more times to achieve desired properties of the refined recycled textile material.

In the description in the foregoing, although some functions have been described with reference to certain features and examples, those functions may be performable by other features and examples whether described or not. Although features have been described with reference to the certain examples, those features may also be present in other examples whether described or not.

Above only some advantageous examples of the inventions have been described to which examples the invention is not to be narrowly limited and many modifications and alterations are possible within the invention.

Reference sings used in the drawing:
10 system
11 feeding means
111 feed pipe
112 feeding screw
112D dilution water source
12 dispersing section
121 disperger
121D dilution water source
122 disperger shaft
123 motor
13 refining section
13LC LC-refining section
13HC HC-refining section
131, 132 refiner

## Claims

1. System of processing recycled textile material, which system (10) comprises feeding means (11) and a dispersing section (12), which dispersing section (12) is configured to perform a dispersing stage to tear pieces of recycled textile into fibers and/or fiber flocks in high consistency of 15-90%, more advantageously 20-60%, most advantageously 25-45%, **characterized in that** the recycled textile material comprises synthetic fibers and non-synthetic fibers, that the dispersing section (12) comprises at least one dispergator (121) with fillings formed of bars with bar width of 1,5 mm - 20 mm and grooves with groove depth of 1 mm - 50 mm and groove width of 1 mm - 20 mm or at least one HC-refiner with fillings formed of bars with bar width of 1,5 mm - 20 mm and grooves with groove depth of 1 mm - 50 mm and groove width of 1 mm - 20 mm and that specific energy consumption in the dispersing section is 30-500 kWh/t.

2. System according to claim 1, **characterized in that** the system (10) further comprises after the dispersing section (12) located refining section (13) comprising at least one refiner (131; 132) and configured to perform a refining stage to refine in low consistency of 3-6 % the fibers and/or the fiber flocks received from the dispersing section (12).

3. System according to claim 1, **characterized in that** the system (10) further comprises after the dispersing section (12) located refining section (13) comprising at least one refiner (131; 132) and configured to perform a refining stage to refine in high consistency of 25-50 % the fibers and/or the fiber flocks received from the dispersing section (12).

4. System according to claim 2 or 3, **characterized in that** the refining section (13) has more than one refiner (131, 132) and that the refiners (131, 132) are connected in series or parallel.

5. Method of processing recycled textile fibers, in which method recycled textile material, in particular cotton fibers, is processed, which method is performed in a system (10) comprising feeding means (11) and a dispersing section (12), which method comprises a feeding stage, in which pieces of the recycled textile material is fed and/or shredded by the feeding means (11), and a dispersing stage, in which the pieces of the recycled textile material are torn to fibers and/or fiber flocks of the recycled textile material in high consistency of 15-90%, more advantageously 20-60%, most advantageously 25-45% in the dispersing section (12), **characterized in that** in the method recycled textile material comprising synthetic fibers and non-synthetic fibers is processed, that the dispersing stage to tear pieces of recycled textile into fibers and/or fiber flocks is performed by at least one dispergator (121) with fillings formed of bars with bar width of 1,5 mm - 20 mm and grooves with groove depth of 1 mm - 50 mm and groove width of 1 mm - 20 mm or at least one HC-refiner with fillings formed of bars with bar width of 1,5 mm - 20 mm and grooves with groove depth of 1 mm - 50 mm and groove width of 1 mm - 20 mm and specific energy consumption in the dispersing stage is 30-150 kWh/t.

6. Method according to claim 5, **characterized in that** the method further comprises a refining stage performed after the dispersing stage in at least one refiner (131; 132) of a refining section (13) of the system (10) and that in the refining stage the fibers and/or the fiber flocks received from the dispersing stage are refined in low consistency of 3-6 %.

7. Method according to claim 5, **characterized in that** the method further comprises a refining stage performed after the dispersing stage in at least one refiner (131; 132) of a refining section (13) of the system (10) and that in the refining stage the fibers and/or the fiber flocks received from the dispersing stage are refined in high consistency of 25-50 %.

8. Method according to any of claims 5-7, **characterized in that** the refining stage is performed in more than one refiners (131; 132) and that the refined recycled textile material is recirculated back to an inlet of a previous refiner one or more times to achieve desired properties of the refined recycled textile material.
